# FASCICULE DE BREVET EUROPEEN

(11) **EP 3 181 342 B1**
(45) Date de publication et mention de la délivrance du brevet: **21.04.2021**
(21) Numéro de dépôt: 16202773.4
(22) Date de dépôt: 07.12.2016
(51) Int. Cl.: B30B 15/06, B30B 11/02

(54) **OUTIL DE COMPRESSION DIFFERENTIELLE D'UN MATERIAU POUDREUX, COMPRENANT UNE MEMBRANE DEFORMABLE**
WERKZEUG ZUR DIFFERENZIELLEN KOMPRESSION VON PULVRIGEM MATERIAL, DAS EINE VERFORMBARE MEMBRAN UMFASST
TOOL FOR DIFFERENTIAL COMPRESSION OF A POWDERY MATERIAL, COMPRISING A DEFORMABLE MEMBRANE

(30) Priorité: 08.12.2015 FR 1561979
(43) Date de publication de la demande: 21.06.2017
(73) Titulaire: COMMISSARIAT À L'ÉNERGIE ATOMIQUE ET AUX ÉNERGIES ALTERNATIVES, 75015 Paris (FR)
(72) Inventeur: BOIDOT, Mathieu, 38160 GIERES (FR)
(74) Mandataire: Brevalex

(56) Documents cités:
- CN-U- 202 715 824
- FR-A1- 2 969 016
- JP-A- H0 394 998
- JP-A- 2000 317 696
- US-B1- 6 355 210

## Description

### DOMAINE TECHNIQUE

L'invention se rapporte à la réalisation d'une pièce par frittage et par compression différentielle d'un matériau poudreux. La pièce réalisée est notamment une rondelle pour module thermoélectrique, susceptible de résister à la température des gaz d'échappement d'un véhicule.

### ÉTAT DE LA TECHNIQUE ANTÉRIEURE

La demande de brevet EP 2 052 800 divulgue un outil de compression différentielle d'une ébauche de pièce, préalablement frittée. L'ébauche est réalisée dans un acier comprenant de 0,5 à 2% en masse de molybdène.

L'ébauche est placée en regard d'une première partie d'un piston qui est espacée d'une deuxième partie du piston par une marche. Cette marche vise à limiter les déplacements de matière à l'intérieur de l'ébauche, lors de la compression différentielle exercée par le piston.

La première partie sert à réaliser une région de la pièce de plus haute densité et la deuxième partie sert à réaliser une région de la pièce de plus faible densité.

Pour éviter la dispersion des poudres lors de l'action différentielle du piston, le procédé de fabrication de la pièce nécessite le frittage de poudre métallique avant l'étape de compression différentielle de l'ébauche, ce qui rend la fabrication de la pièce plus longue et assez coûteuse.

Il existe par conséquent un besoin de simplifier la fabrication d'une pièce à partir d'un matériau poudreux, tout en limitant les flux de matière lors de la fabrication de la pièce.

Les Documents JP H03 94998 A et US 6 355 210 B1 décrivent des outils pour comprimer un matériau poudreux comprenant un piston de compression, un support pour le matériau poudreux et une membrane déformable par action du piston de compression.

### EXPOSÉ DE L'INVENTION

L'invention vise à résoudre au moins partiellement les problèmes rencontrés dans les solutions de l'art antérieur.

À cet égard, l'invention a pour objet un outil pour comprimer de façon différentielle un matériau poudreux.

L'outil comprend un piston de compression différentielle et un support pour le matériau poudreux. Le piston de compression différentielle comprend une première partie et une deuxième partie. Le support est destiné à être situé à l'opposé du piston de compression différentielle par rapport au matériau poudreux.

Le piston de compression différentielle et le support sont configurés pour que la première partie exerce une première pression sur une première région d'une surface extérieure qui délimite le matériau poudreux,
la deuxième partie comportant un évidement espacé latéralement de la première partie et configuré pour être en regard d'une deuxième région de la surface extérieure du matériaux poudreux.

Selon l'invention, l'outil comprend une membrane qui est déformable par le piston de compression différentielle, la membrane déformable étant configurée pour retenir au moins partiellement le matériau poudreux dans l'outil.

L'outil permet de fabriquer une pièce en matériau poudreux en réalisant une étape de frittage simultanément et/ou après l'étape de compression différentielle du matériau poudreux.

La membrane permet de retenir le matériau poudreux et de maîtriser la forme de la pièce réalisée, lors de la compression différentielle.

La membrane est notamment destinée à être située entre le matériau poudreux et le piston de compression différentielle selon la direction de déplacement du piston.

La membrane est notamment configurée pour se déformer en regard de la deuxième région sous l'action du matériau poudreux, lorsque le matériau poudreux est comprimé dans la première région et que la membrane est dépourvue de contact avec la deuxième région.

L'outil selon l'invention permet ainsi de s'affranchir d'une étape préalable de frittage du matériau poudreux, pour réaliser une compression différentielle de l'ébauche obtenue.

L'invention peut comporter de manière facultative une ou plusieurs des caractéristiques suivantes combinées entre elles ou non.

De préférence, la deuxième région est située au moins partiellement à l'intérieur de la première région. La deuxième région est notamment au moins partiellement entourée par la première région.

L'évidement entre la deuxième partie par rapport à la première partie reste de dimension constante, en particulier lors de l'actionnement du piston.

Avantageusement, la deuxième partie comprend une portion en retrait formant un deuxième étage du piston et décalée de l'évidement par rapport à la première partie qui forme un premier étage du piston et/ou la deuxième partie comprend un trou traversant.

Selon une particularité de réalisation, la deuxième partie comprend une surface non plane destinée à être en regard du matériau poudreux.

Selon une forme de réalisation avantageuse, la première partie comprend une surface non plane qui est destinée à être en regard du matériau poudreux.

Selon une forme de réalisation particulièrement avantageuse, le piston de compression différentielle est symétrique en rotation autour d'un axe de l'outil.

Selon une autre particularité de réalisation, la deuxième partie est située radialement vers l'intérieur par rapport à la première partie relativement à l'axe de l'outil.

En variante, la deuxième partie pourrait notamment être située radialement à l'extérieur de la première partie.

Avantageusement, le support comprend un piston configuré pour appliquer une pression uniforme sur la surface extérieure du matériau poudreux ou bien le support comprend un piston de compression différentielle configuré pour appliquer une pression différente sur la première région par rapport à celle sur la deuxième région.

Selon une particularité de réalisation, l'outil comprend des moyens de chauffage pour réaliser le frittage du matériau poudreux, de préférence lors de la compression différentielle du matériau poudreux.

Selon une autre particularité de réalisation, la membrane déformable comprend une feuille souple comprenant de préférence un matériau métallique et/ou du graphite.

L'invention porte également sur un procédé de fabrication d'une pièce par compression différentielle d'un matériau poudreux au moyen d'un outil tel que défini ci-dessus.

Le procédé comprend une étape frittage et de compression d'une première région d'une surface extérieure du matériaux poudreux, une deuxième région de la surface extérieure du matériau poudreux étant en regard de la deuxième partie de l'outil, de manière à réaliser la pièce avec une surface extérieure comprenant une première région de densité plus importante que celle d'une deuxième région de la surface extérieure de la pièce,
le matériaux poudreux étant situé entre le support et la membrane, la membrane se déformant mécaniquement lors d'une compression exercée par la première partie et par réaction du matériaux poudreux sur la membrane en regard de l'évidement.

Selon une particularité de réalisation, le matériau poudreux comprend un siliciure de manganèse ou d'étain, de préférence dopée électriquement, très préférablement un siliciure selon la formule MnSi_{1.77} et/ou Mg₂SiₓSn₁₋ₓ avec x compris entre 0,2 et 0,8.

Les siliciures de manganèse ou d'étain ont une conductivité thermique suffisamment élevée pour résister à la température de gaz d'échappement d'un véhicule.

Selon une forme de réalisation avantageuse, la pièce fabriquée est de préférence une rondelle, le procédé mettant en œuvre l'étape de frittage et de compression du procédé de fabrication tel que défini ci-dessus, et comprenant une étape d'usinage de la deuxième région. L'usinage de cette deuxième région étant facilité par la moindre densité de celle-ci.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure la est une représentation schématique d'un outil de compression différentielle d'un matériau poudreux, selon un premier mode de réalisation;
- la figure 1b est une représentation schématique de l'outil selon le premier mode de réalisation, avant la compression du matériau poudreux ;
- la figure 1c est une représentation schématique de l'outil selon le premier mode de réalisation, à la fin de la compression du matériau poudreux ;
- la figure 2 est une vue de profil d'une ébauche de rondelle réalisée à partir de l'outil de compression différentielle ;
- la figure 3 est une vue de trois quart face d'une rondelle élaborée après usinage d'une région de faible densité d'une ébauche de rondelle ;
- la figure 4 est une représentation schématique d'un outil de compression différentielle d'un matériau poudreux, selon un deuxième mode de réalisation ;
- la figure 5 est une représentation schématique d'un outil de compression différentielle d'un matériau poudreux, selon un troisième mode de réalisation ;
- la figure 6 est une représentation schématique d'un outil de compression différentielle d'un matériau poudreux, selon un quatrième mode de réalisation ;
- la figure 7 est une représentation schématique d'un outil de compression différentielle d'un matériau poudreux, selon un cinquième mode de réalisation ;
- la figure 8 est une représentation schématique d'un outil de compression différentielle d'un matériau poudreux, selon un sixième mode de réalisation.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

Les figures la à 1c représentent un outil 1 de compression différentielle d'un matériau poudreux 5, selon un premier mode de réalisation.

Le matériau poudreux 5 comprend une poudre métallique comprenant un siliciure d'étain et/ou de manganèse, selon la formule MnSi_{1.77} et/ou Mg₂SiₓSn₁₋ₓ, avec x compris entre 0,2 et 0,8. Ces matériaux sont dopés électriquement et ils sont choisis pour leurs propriétés thermoélectriques, notamment leur conductivité électrique élevée, leur faible conductivité thermique et leur coefficient Seebeck élevé. En revanche, la fabrication de pièces 50, 56 à partir de ces matériaux est rendue difficile de par leur coefficient de dilatation élevé.

L'outil 1 comprend un piston inférieur 2, un piston supérieur 4 et une paroi latérale 3 entourant partiellement le piston inférieur 2 et le piston supérieur 4.

Les pistons inférieur 2 et supérieur 4, ainsi que la paroi latérale 3 sont situés à l'intérieur d'une enceinte calorifugée 7, qui comprend un appareil de frittage « flash », un appareil de chauffage à microondes, ou un four.

L'enceinte calorifugée 7 forme des moyens de chauffage conçu pour réaliser le frittage du matériau poudreux 5 de manière simultanée avec sa compression différentielle.

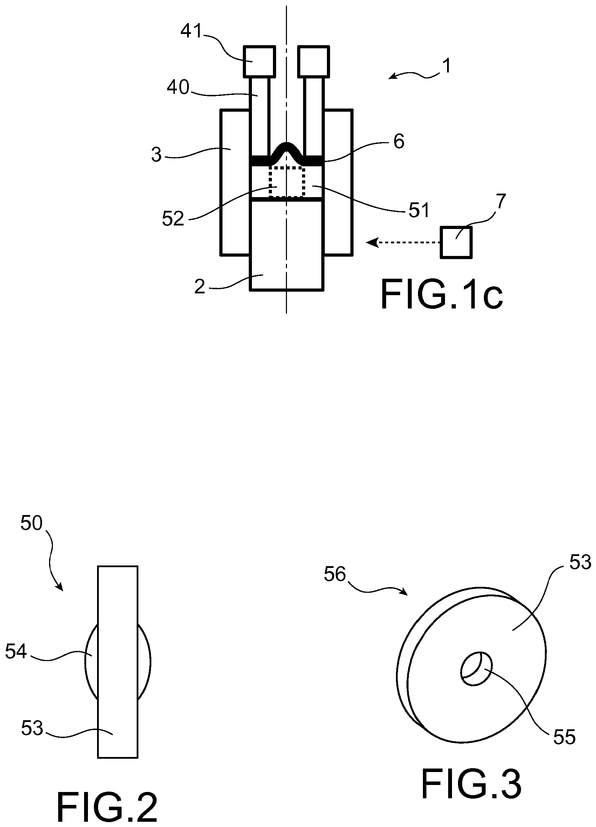

L'outil 1 est symétrique de révolution autour d'un axe longitudinale X-X de l'outil qui correspond également à celui de la rondelle 56, visible à la figure 3, qui est réalisée à partir du matériau poudreux 5.

Dans la suite de l'exposé et en l'absence de précision du contraire, une direction longitudinale est une direction parallèle à l'axe longitudinal X-X de l'outil et une direction latérale est une direction orthogonale à la direction longitudinale X-X.

Par ailleurs, les adjectifs « supérieur » et « inférieur » sont définis par rapport au matériau poudreux 5 lorsque celui-ci est disposé dans l'outil 1, en référence à la direction longitudinale X-X.

Le matériau poudreux 5 est situé entre le piston inférieur 2 et le piston supérieur 4. Il est entouré en totalité par la paroi latérale 3. De plus, sa partie supérieure est enveloppée d'une membrane déformable 6 qui est située entre le matériau poudreux 5 et le piston supérieur 4.

Le piston inférieur 2 est situé à l'opposé du piston supérieur 4 par rapport au matériau poudreux 5 le long de l'axe longitudinal X-X. Il est configuré pour comprimer uniformément la surface inférieure du matériau poudreux 5 et il est délimité par une surface supérieure plane en regard d'une surface inférieure du matériau poudreux 5. Le piston inférieur 2 joue le rôle de support pour le matériau poudreux 5.

Le piston supérieur 4 est un piston de compression différentielle 4 configuré pour comprimer de manière non uniforme la surface supérieure du matériau poudreux 5. Il est mis en mouvement par un actionneur 41 mécanique ou hydraulique, typiquement un moteur.

Le piston supérieur 4 comprend une première partie 40 en forme de couronne annulaire et qui est délimitée en son centre par un évidement. La couronne 40 présente une surface inférieure plane qui est en regard du matériau poudreux 5.

Il comporte également un trou traversant 43 au centre de la couronne 40. Ce trou traversant 43 forme l'évidement du piston de compression différentielle 4 et il constitue une deuxième partie du piston de compression différentielle 4.

La couronne 40 est en regard d'une première région 51 délimitée par la surface supérieure du matériau poudreux 5. La couronne 40 est destinée à exercer une première pression sur la première région 51 qui est supérieure à celle exercée par l'outil 1 sur une deuxième région 52 délimitée par la surface supérieure du matériau poudreux 5 qui est en regard du trou traversant 43.

La pression exercée par l'outil 1 sur la deuxième région 52 du matériau poudreux 5, appelée deuxième pression, est la pression exercée par la membrane déformable 6 sur le matériau poudreux 5 à cet endroit.

La membrane 6 s'étend sur toute la surface du piston de compression différentielle 4, y compris le long de la couronne 40, en épousant les bords de la surface interne de l'outil 1 qui est délimitée par la paroi latérale 3.

La membrane déformable 6 est réalisée sous la forme d'une feuille souple dans un matériau métallique comprenant par exemple de l'acier, du molybdène, du niobium, du tungstène et/ou du platine. Il peut aussi s'agir d'une feuille de papier comprenant du graphite. L'épaisseur, le matériau et la masse de la membrane 6 sont déterminées pour qu'elle soit déformable sous l'action du piston de compression différentielle 4 et par réaction du matériau poudreux 5.

La membrane 6 exerce notamment la deuxième pression sur le matériau poudreux lorsqu'elle est comprimée par la couronne 40 d'une part et qu'elle est soumise à un effort de pression par le matériau poudreux 5 en regard du trou traversant 43 d'autre part. La membrane 6 se déforme en regard du trou traversant 43 sous l'action du matériau poudreux 5 et de la compression exercée dans la première région 51 sur le matériau poudreux 5.

Elle sert à retenir le matériau poudreux 5 dans l'outil, à contrôler les déplacements de matériau poudreux 5 entre la première région 51 et la deuxième région 52, et à exercer une deuxième pression non nulle sur le matériau poudreux 5.

L'outil 1 permet de réaliser une pièce, typiquement une ébauche de rondelle 50 telle que celle représentée à la figure 2, avec une première région 53 de forte densité, qui est obtenue par compression de la première région 51 du matériau poudreux 5 par la couronne 40, et une deuxième région 54 de faible densité, qui est obtenue par compression de la deuxième région 52 du matériau poudreux 5 par la membrane 6.

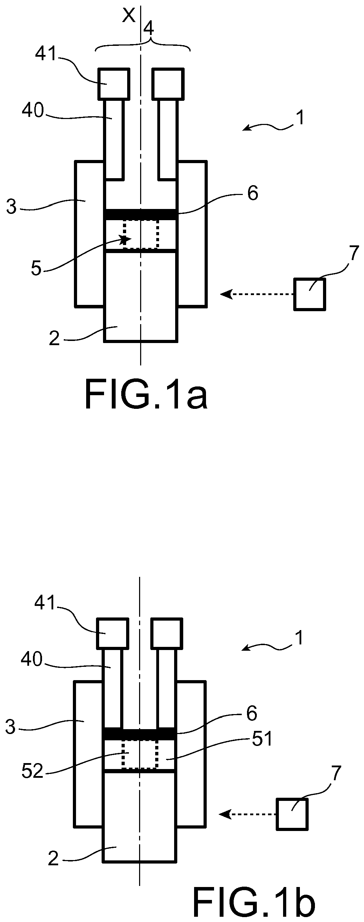

L'ébauche de rondelle 50 est obtenue selon un procédé de fabrication qui est décrit à nouveau en référence aux figures 1a à 1c.

Tout d'abord, le matériau poudreux 5 est disposé sur le piston inférieur 2 qui joue le rôle de support pour le matériau poudreux 5. Puis, la membrane déformable 6 est placée sur le matériau poudreux 5 pour le recouvrir.

A la figure 1b, le piston supérieur 4 vient ensuite au contact mécanique de la membrane 6.

A la figure 1c, le piston supérieur 4 et le piston inférieur 2 exercent ensuite chacun un effort de compression sur le matériau poudreux 5 qui est simultanément chauffé.

Le frittage du matériau poudreux 5 à lieu dans l'outil 1 à une température comprise entre 650° et 1050°.

Lorsque ce matériau 5 comprend un siliciure de manganèse de formule MnSi_{1.77}, le frittage a lieu entre 900°C et 1050 °C, de préférence sensiblement 950°C.

Lorsque le matériau poudreux 5 comprend un siliciure de manganèse et d'étain de formule Mg₂SiₓSn₁₋ₓ, avec x compris entre 0,2 et 0,8, le frittage est réalisée à une température comprise entre 650°C et 800 °C, de préférence sensiblement 720°C.

La première région 51 du matériau poudreux 5 est soumise à une pression comprise entre 30 MPa et 80 MPa, de préférence 35Mpa environ.

La première région 51 est comprimée selon la direction de l'axe longitudinal X-X par la couronne 40 du piston différentielle d'une part et le piston inférieur 2 d'autre part.

La deuxième région 52 du matériau poudreux 5 est comprimée selon la direction de l'axe longitudinal X-X par la membrane déformable 6, notamment au niveau du trou traversant 43. La membrane 6 se déforme alors vers le haut, en remplissant partiellement le trou traversant 43, au niveau de la deuxième région 52 du matériau poudreux 5.

À la fin de l'étape de frittage et de compression différentielle, le matériau poudreux 5 donne lieu à une ébauche de rondelle 50 telle que celle représentée à la figure 2.

Cette ébauche 50 comprend une région de forte densité 53 correspondant à la première région 51 du matériau poudreux 5 et une région de faible densité 54 correspondant à la deuxième région 52 du matériau poudreux 5.

La région de forte densité 53 est de densité plus élevée que celle de la région de faible densité 54, ce qui résulte notamment du fait que la vitesse de densification du matériau poudreux 5 dépend fortement de la pression qui lui est appliquée.

La densité de la région de forte densité 53 relativement à la densité maximale théorique du matériau poudreux 5 est par exemple comprise entre 92% et 100%. La densité de la région de faible densité 54 est par exemple comprise entre 75% et 85%.

La vitesse de densification du matériau poudreux 5 à 950°C varie par exemple de 6,5^{∗}10⁻⁴ s⁻¹ à 1,2^{∗}10⁻⁶ s⁻¹, lorsque la pression exercée sur le matériau poudreux 5 varie d'une pression nulle à une pression de 35MPa environ. Autrement dit, la vitesse de densification du matériau poudreux 5 est environ 540 fois plus rapide lorsque la pression exercée s'élève à 35MPa que lorsqu'aucune pression n'est exercée sur le matériau poudreux 5.

La compression différentielle du matériau poudreux 5 lors de son frittage permet donc de contrôler efficacement la densité de la région de forte densité 53 par rapport à celle de la région de faible densité 54.

La région de faible densité 54 est alors usinée pour y réaliser un trou traversant 55 et la région de forte densité 53 subit un usinage final. La différence de densité entre les régions 53, 54 permet de limiter les précautions à prendre lors de l'usinage du trou traversant 55 dabs la région de faible densité 54.

La rondelle 56 obtenue après l'usinage de l'ébauche 50, visible à la figure 3, présente une meilleure qualité de finition qu'une rondelle qui serait obtenue à partir d'une ébauche présentant une densité uniforme après le frittage du matériau poudreux 5.

Cette rondelle semi-conductrice 56 est utilisable pour fabriquer un module thermoélectrique pour un véhicule automobile. Elle est destinée à supporter la température des gaz d'échappement.

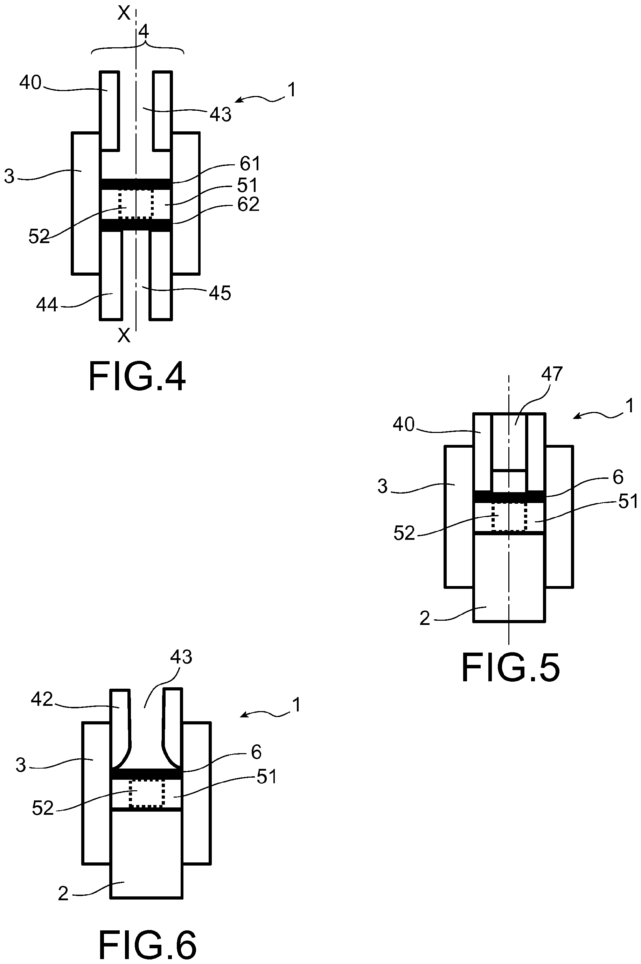

Le mode de réalisation de la figure 4 se distingue de celui représenté aux figures 1a à 1c en ce que le piston inférieur 2 est un piston de compression différentielle au lieu d'un piston configuré pour appliquer une pression uniforme sur la surface inférieure du matériau poudreux 5.

L'outil 1 également une membrane déformable inférieure 62 qui est située entre la surface extérieure inférieure du matériau poudreux 5 et la surface supérieure du piston inférieur 2.

Le piston inférieur 2 comporte une couronne inférieure 44 autour de l'axe longitudinal X-X et un trou traversant 45 au centre de la couronne inférieure 44. La couronne inférieure 44 présente une surface supérieure plane qui est destinée à être en contact avec la surface inférieure du matériau poudreux 5.

La couronne inférieure 44 est en vis-à-vis de la couronne 40 du piston supérieure 4, ces deux couronnes 40, 44 étant respectivement situées de part et d'autre des membranes déformables 61, 62 le long de la direction longitudinale X-X.

La couronne inférieure 44 est identique à la couronne 40 du piston supérieure 4. Elle forme une première partie du piston inférieure 2 configurée pour exercer une première pression sur une première région délimitant la surface inférieure du matériau poudreux 5. Cette première région est confondue avec celle délimitée par la couronne 40 du piston supérieur 4.

Le trou traversant du piston inférieur 2 est en vis-à-vis du trou traversant 43 du piston supérieur 4, de l'autre côté du matériau poudreux 5. Il forme un évidement du piston inférieur 2 et il constitue une deuxième partie de ce piston de compression différentielle.

La membrane inférieure 62 est alors destinée à exercer une deuxième pression, inférieure à la première pression exercée par la couronne inférieure 44, lors de la compression différentielle du matériau poudreux 5, sous l'action de la couronne inférieure 44 et de la réaction du matériau poudreux 5.

La membrane déformable inférieure 62 est identique à la membrane déformable supérieure 61. Ces membranes 61, 62 sont de matériau et de forme identiques à ceux de la membrane déformable 6 du premier mode de réalisation de l'invention.

Le mode de réalisation représenté à la figure 5 se distingue de celui du premier mode de réalisation par la forme de la deuxième partie du piston supérieur 4.

Le trou traversant 43 est remplacé par un évidement et une portion en retrait 47 qui est davantage éloignée de la surface supérieure du matériau poudreux 5 que la couronne 40, lorsque l'outil 1 est au repos. Cet évidement et cette portion en retrait 47 sont situés au centre de la couronne 40.

La couronne 40 forme un premier étage du piston de compression différentielle 4, et la portion en retrait 47 forme un deuxième étage du piston de compression différentielle 4 qui est décalé de la hauteur de l'évidement du premier étage le long de l'axe longitudinal X-X.

La portion en retrait 47 est délimitée par une surface inférieure plane qui est destinée à limiter les déformations de la membrane déformable 6 vers le haut, lors de la compression différentielle du matériau poudreux 5. Cette portion en retrait 47 est notamment destinée à venir en contact mécanique de la membrane déformable 6.

La membrane 6 se déforme en regard de la portion en retrait 47 sous l'action du matériau poudreux 5 et de la compression exercée dans la première région 51, avant d'être en contact avec la portion en retrait 47.

La portion en retrait 47 permet de contrôler plus facilement la forme de la deuxième région 54, de plus faible densité, de l'ébauche 50 produite. Surtout, elle permet de mieux contrôler les flux de matière de la première région 51 à la deuxième région 52, lors de la compression différentielle du matériau poudreux 5.

La figure 6 représente un quatrième mode de réalisation de l'outil 1. Ce mode de réalisation se distingue de celui du premier mode de réalisation par la forme de la couronne 42 du piston supérieur.

La couronne 42 est délimitée dans sa partie inférieure par une surface inférieure non plane. Cette surface inférieure qui est en regard de la membrane déformable 6 est incurvée vers l'extérieur de l'outil, vers le bas et en direction de la paroi latérale 3.

La forme non plane de la couronne 42 vise à faciliter l'usinage du trou traversant 55 dans la région de faible densité 54 de l'ébauche 50, pour réaliser la rondelle 56.

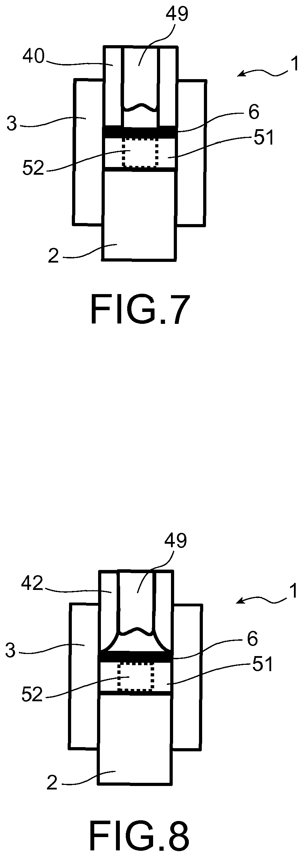

La figure 7 représente un cinquième mode de réalisation qui se distingue de celui du troisième mode de réalisation, représenté à la figure 5, par la forme de la surface inférieure de la portion en retrait.

La portion en relief 49, qui forme le deuxième étage du piston supérieur 4, reste décalée de la hauteur de l'évidement le long de l'axe longitudinal X-X par rapport à la couronne 40 qui forme le premier étage du piston supérieur 4. La portion en relief 49 est toujours au centre de la couronne 40.

Néanmoins, la portion en relief 49 présente une surface inférieure de forme ondulée au lieu de la surface inférieure plane de la portion en retrait 47 du troisième mode de réalisation.

La surface inférieure ondulée de la portion en relief 49 est particulièrement avantageuse lorsque celle-ci présente une aire importante par rapport à celle de la couronne 40.

La figure 8 représente un sixième mode de réalisation qui se différencie du cinquième mode de réalisation par la forme non plane de la surface inférieure de la couronne 40 du piston supérieur 4.

La couronne 40 présente une surface inférieure qui est incurvée vers l'extérieur de l'outil, vers le bas et en direction de la paroi latérale 3. Cette surface inférieure est destinée à être en regard de la membrane déformable 6 et elle présente une forme analogue à celle de la surface inférieure de la couronne du quatrième mode de réalisation de l'outil 1.

Bien entendu, diverses modifications peuvent être apportées par l'homme du métier à l'invention qui vient d'être décrite sans sortir du cadre de l'exposé de l'invention.

La forme de la première partie 40, 42 et celle de la deuxième partie 43, 47 sont déterminées en fonction de la forme de la pièce 50, 56 à fabriquer, étant entendu que l'outil prendrait une forme différente s'il était destiné à fabriquer d'autres pièces que des rondelles.

En variante du deuxième mode de réalisation (non représentée), la couronne inférieure 44 pourrait être décalée de la couronne 40 du piston supérieur 4 selon une direction latérale de l'outil 1.

La couronne inférieure 44 pourrait notamment être en vis-à-vis du trou traversant 43 du piston supérieur 4, le trou traversant 45 étant alors en regard de la couronne 40 du piston supérieur 4.

Par ailleurs, la couronne inférieure 44 pourrait prendre une forme et être réalisée dans un matériau différent de celui de la couronne 40 du piston supérieure 4. De manière similaire, le trou traversant 45 du piston inférieur 2 pourrait être remplacé par une portion en retrait qui serait analogue à celle du troisième mode de réalisation. En outre, la surface supérieure de cette portion en retrait est susceptible d'être plane ou non plane.

La surface supérieure de la couronne inférieure 44 pourrait aussi être non plane, par analogie avec la surface inférieure de la couronne 40 du quatrième mode de réalisation.

## Revendications

1. Outil (1) pour comprimer de façon différentielle un matériau poudreux (5), comprenant :
un piston de compression différentielle (4) comprenant un première partie (40, 42) et une deuxième partie (43, 47), et
un support (2) pour le matériau poudreux (5), destiné à être situé à l'opposé du piston de compression différentielle (4) par rapport au matériau poudreux (5),
le piston de compression différentielle (4) et le support (2) étant configurés pour que la première partie (40, 42) exerce une première pression sur une première région (51) d'une surface extérieure qui délimite le matériau poudreux (5),
la deuxième partie (43, 47) comportant un évidement espacé latéralement de la première partie (40, 42) et configuré pour être en regard d'une deuxième région (52) de la surface extérieure du matériau poudreux (5),
une membrane (6) qui est déformable par action du piston de compression différentielle (4),
la membrane déformable (6) étant configurée pour contrôler les déplacements de matériau poudreux (5) entre la première région (51) et la deuxième région (52), en étant entre le matériau poudreux (5) et le piston de compression différentielle (4), et en se déformant mécaniquement lors de la compression exercée par la première partie (40, 42) et par réaction du matériaux poudreux (5) sur la membrane (6) en regard de l'évidement,
l'évidement entre la deuxième partie (43, 47) par rapport à la première partie (40, 42) reste de dimension constante, pour réaliser une pièce avec une surface extérieure comprenant une première région (53) de densité supérieure à celle d'une deuxième région (54) de la surface extérieure de la pièce (50).

2. Outil (1) selon la revendication précédente, dans lequel la deuxième partie (43, 47) comprend une portion en retrait (47) formant un deuxième étage du piston (4) et décalée de l'évidement par rapport à la première partie (40, 42) formant un premier étage du piston (4), et/ou dans lequel la deuxième partie (43, 47) comprend un trou traversant (43).

3. Outil (1) selon la revendication précédente, dans lequel la deuxième partie (47) comprend une surface non plane destinée à être en regard du matériau poudreux (5).

4. Outil (1) selon l'une quelconque des revendications précédentes, dans lequel la première partie (42) comprend une surface non plane qui est destinée à être en regard du matériau poudreux (5).

5. Outil (1) selon l'une quelconque des revendications précédentes, dans lequel le piston de compression différentielle (4) est symétrique en rotation autour d'un axe de l'outil (X-X).

6. Outil (1) selon la revendication précédente, dans lequel la deuxième partie (43, 47) est située radialement vers l'intérieur par rapport à la première partie (40, 42) relativement à l'axe de l'outil (X-X).

7. Outil (1) selon l'une quelconque des revendications précédentes, dans lequel le support (2) comprend un piston configuré pour appliquer une pression uniforme sur la surface extérieure du matériau poudreux (5) ou bien dans lequel le support (2) comprend un piston de compression différentielle (44, 45) configuré pour appliquer une pression différente sur la première région (51) par rapport à la pression sur la deuxième région (52).

8. Outil (1) selon l'une quelconque des revendications précédentes, comprenant des moyens de chauffage (7) pour réaliser le frittage du matériau poudreux (5), de préférence lors de la compression différentielle du matériau poudreux (5).

9. Outil (1) selon l'une quelconque des revendications précédentes, dans lequel la membrane déformable (6) comprend une feuille souple comprenant de préférence un matériau métallique et/ou du graphite.

10. Procédé de fabrication d'une pièce (50) par frittage et par compression différentielle d'un matériau poudreux (5) au moyen d'un outil selon l'une quelconque des revendications précédentes, comprenant :
une étape de frittage et de compression d'une première région (51) d'une surface extérieure du matériaux poudreux (5), une deuxième région (52) de la surface extérieure du matériau poudreux (5) étant en regard de la deuxième partie (43, 47) de l'outil (1), de manière à réaliser une pièce (50) avec une surface extérieure comprenant une première région (53) de densité plus importante que celle d'une deuxième région (54) de la surface extérieure de la pièce (50),
le matériaux poudreux (5) étant situé entre le support (2) et la membrane (6), la membrane (6) se déformant mécaniquement lors de la compression exercée par la première partie (40, 42) et par réaction du matériaux poudreux (5) sur la membrane (6) en regard de l'évidement.

11. Procédé de fabrication selon la revendication précédente, dans lequel le matériau poudreux (5) comprend un siliciure de manganèse ou d'étain, de préférence dopée électriquement, très préférablement un siliciure selon la formule MnSi_{1.77} et/ou Mg₂SiₓSn₁₋ₓ avec x compris entre 0,2 et 0,8.

12. Procédé de fabrication d'une pièce (56), de préférence une rondelle (56), mettant en oeuvre l'étape de frittage et de compression du procédé de fabrication selon l'une des revendications 10 et 11, et comprenant une étape d'usinage de la deuxième région (54).

## Patentansprüche

1. Werkzeug (1) zum differenziellen Verdichten eines pulverförmigen Materials (5), enthaltend:
einen Differenzdruckkolben (4), der einen ersten Abschnitt (40, 42) und einen zweiten Abschnitt (43, 47) aufweist, und
einen Träger (2) für das pulverförmige Material (5), der dazu bestimmt ist, in Bezug auf das pulverförmige Material (5) dem Differenzdruckkolben (4) entgegengesetzt angeordnet zu werden,
wobei der Differenzdruckkolben (4) und der Träger (2) so ausgelegt sind, dass der erste Abschnitt (40, 42) einen ersten Druck auf einen ersten Bereich (51) einer Außenfläche ausübt, der das pulverförmige Material (5) eingrenzt,
wobei der zweite Abschnitt (43, 47) eine Ausnehmung aufweist, die seitlich von dem ersten Abschnitt (40, 42) beabstandet und dazu ausgelegt ist, einem zweiten Bereich (52) der Außenfläche des pulverförmigen Materials (5) gegenüberzuliegen,
eine Membran (6), die durch die Wirkung des Differenzdruckkolbens (4) verformbar ist, wobei die verformbare Membran (6) dazu ausgelegt ist, die Verdrängungen des pulverförmigen Materials (5) zwischen dem ersten Bereich (51) und dem zweiten Bereich (52) zu steuern, indem sie zwischen dem pulverförmigen Material (5) und dem Differenzdruckkolben (4) liegt, und sich bei dem von dem ersten Abschnitt (40, 42) ausgeübten Druck und durch Reaktion des pulverförmigen Materials (5) auf der Membran (6) gegenüber der Ausnehmung mechanisch verformt,
wobei die Ausnehmung zwischen dem zweiten Abschnitt (43, 47) und dem ersten Abschnitt (40, 42) eine konstante Abmessung behält, um ein Werkstück mit einer Außenfläche herzustellen, die einen ersten Bereich (53) mit einer höheren Dichte als ein zweiter Bereich (54) der Außenfläche des Werkstücks (50) aufweist.

2. Werkzeug (1) nach dem vorhergehenden Anspruch,
wobei der zweite Abschnitt (43, 47) einen rückspringenden Abschnitt (47) aufweist, der eine zweite Stufe des Kolbens (4) bildet und gegenüber dem ersten Abschnitt (40, 42), der eine erste Stufe des Kolbens (4) bildet, von der Ausnehmung versetzt ist, und/oder wobei der zweite Abschnitt (43, 47) eine Durchgangslochung (43) aufweist.

3. Werkzeug (1) nach dem vorhergehenden Anspruch,
wobei der zweite Abschnitt (47) eine nicht ebene Oberfläche aufweist, die dazu bestimmt ist, dem pulverförmigen Material (5) gegenüberzuliegen.

4. Werkzeug (1) nach einem der vorhergehenden Ansprüche,
wobei der erste Abschnitt (42) eine nicht ebene Oberfläche aufweist, die dazu bestimmt ist, dem pulverförmigen Material (5) gegenüberzuliegen.

5. Werkzeug (1) nach einem der vorhergehenden Ansprüche,
wobei der Differenzdruckkolben (4) um eine Werkzeugachse (X-X) rotationssymmetrisch ist.

6. Werkzeug (1) nach dem vorhergehenden Anspruch,
wobei der zweite Abschnitt (43, 47) bezüglich des ersten Abschnitts (40, 42) relativ zur Werkzeugachse (X-X) radial einwärts angeordnet ist.

7. Werkzeug (1) nach einem der vorhergehenden Ansprüche,
wobei der Träger (2) einen Kolben aufweist, der dazu ausgelegt ist, einen gleichmäßigen Druck auf die Außenfläche des pulverförmigen Materials (5) auszuüben, oder wobei der Träger (2) einen Differenzdruckkolben (44, 45) aufweist, der dazu ausgelegt ist, auf den ersten Bereich (51) einen anderen Druck auszuüben als auf den zweiten Bereich (52).

8. Werkzeug (1) nach einem der vorangehenden Ansprüche,
enthaltend Heizmittel (7) zum Bewirken des Sinterns des pulverförmigen Materials (5), vorzugsweise bei differentieller Verdichtung des pulverförmigen Materials (5).

9. Werkzeug (1) nach einem der vorhergehenden Ansprüche,
wobei die verformbare Membran (6) eine nachgiebige Folie enthält, die vorzugsweise ein metallisches Material und/oder Graphit enthält.

10. Verfahren zur Herstellung eines Werkstücks (50) durch Sintern und differentielles Verdichten eines pulverförmigen Materials (5) mittels eines Werkzeugs nach einem der vorhergehenden Ansprüche, umfassend:
einen Schritt des Sinterns und Verdichtens eines ersten Bereichs (51) einer Außenfläche des pulverförmigen Materials (5), wobei ein zweiter Bereich (52) der Außenfläche des pulverförmigen Materials (5) dem zweiten Abschnitt (43, 47) des Werkzeugs (1) gegenüberliegt, um ein Werkstück (50) mit einer Außenfläche herzustellen, die einen ersten Bereich (53) mit höherer Dichte als ein zweiter Bereich (54) der Außenfläche des Werkstücks (50) aufweist,
wobei das pulverförmige Material (5) zwischen dem Träger (2) und der Membran (6) liegt, wobei die Membran (6) sich unter dem von dem ersten Abschnitt (40, 42) ausgeübten Druck und durch Reaktion des pulverförmigen Materials (5) auf der Membran gegenüber der Ausnehmung mechanisch verformt.

11. Herstellungsverfahren nach dem vorhergehenden Anspruch,
wobei das pulverförmige Material (5) ein vorzugsweise elektrisch dotiertes Mangan- oder Zinnsilicid, besonders bevorzugt ein Silicid gemäß der Formel MnSi_{1,77} und/oder Mg₂SiₓSn₁₋ₓ mit x zwischen 0,2 und 0,8 enthält.

12. Verfahren zur Herstellung eines Werkstücks (56), vorzugsweise einer Unterlegscheibe (56), durch Ausführung des Schritts des Sinterns und Verdichtens des Herstellungsverfahrens nach einem der Ansprüche 10 und 11, und mit einem Schritt der Bearbeitung des zweiten Bereichs (54).

## Claims

1. A tool (1) for differentially compressing a powder material (5), comprising:
a differential compression piston (4) comprising a first part (40, 42) and a second part (43, 47), and
a support (2) for the powder material (5), for being located opposite to the differential compression piston (4) with respect to the powder material (5),
the differential compression piston (4) and the support (2) being configured so that the first part (40, 42) exerts a first pressure on a first region (51) of an external surface which delimits the powder material (5),
the second part (43, 47) including a recess laterally spaced from the first part (40, 42) and configured to face a second region (52) of the external surface of the powder material (5),
a membrane (6) which is deformable by an action of the differential compression piston (4),
the deformable membrane (6) being configured to control movements of powder material (5) between the first region (51) and second region (52), by being between the powder material (5) and the differential compression piston (4), and by mechanically deforming during the compression exerted by the first part (40, 42) and by reaction of the powder material (5) on the membrane (6) facing the recess,
the recess between the second part (43, 47) with respect to the first part (40, 42) remains constant in dimension, to make a piece with an external surface comprising a first region (53) having a specific density greater than that of a second region (54) of the external surface of the piece (50).

2. The tool (1) according to the previous claim, wherein the second part (43, 47) comprises a recessed portion (47) forming a second stage of the piston (4) and offset from the recess with respect to the first part (40, 42) forming a first stage of the piston (4), and/or wherein the second part (43, 47) comprises a through hole (43).

3. The tool (1) according to the previous claim, wherein the second part (47) comprises a non-planar surface for facing the powder material (5).

4. The tool (1) according to any of the previous claims, wherein the first part (42) comprises a non-planar surface which is for facing the powder material (5).

5. The tool (1) according to any of the previous claims, wherein the differential compression piston (4) is rotatably symmetrical about a tool axis (X-X).

6. The tool (1) according to the previous claim, wherein the second part (43, 47) is located radially inwardly with respect to the first part (40, 42) relative to the tool axis (X-X).

7. The tool (1) according to any of the previous claims, wherein the support (2) comprises a piston configured to apply a uniform pressure to the external surface of the powder material (5) or wherein the support (2) comprises a differential compression piston (44, 45) configured to apply a pressure to the first region (51) which is different from the pressure to the second region (52).

8. The tool (1) according to any of the previous claims, comprising heating means (7) to perform sintering of the powder material (5), preferably during the differential compression of the powder material (5).

9. The tool (1) according to any of the previous claims, wherein the deformable membrane (6) comprises a flexible sheet preferably comprising a metal material and/or graphite.

10. A method for manufacturing a piece (50) by sintering and by differentially compressing a powder material (5) by means of a tool according to any of the previous claims, comprising:
a step of sintering and compressing a first region (51) of an external surface of the powder material (5), a second region (52) of the external surface of the powder material (5) facing the second part (43, 47) of the tool (1), so as to make a piece (50) with an external surface comprising a first region (53) having a larger specific density than that of a second region (54) of the external surface of the piece (50),
the powder material (5) being located between the support (2) and the membrane (6), the membrane (6) mechanically deforming during the compression exerted by the first part (40, 42) and by reaction of the powder material (5) on the membrane (6) facing the recess.

11. The manufacturing method according to the previous claim, wherein the powder material (5) comprises a manganese or tin silicide, preferably electrically doped, most preferably a silicide having the formula MnSi_{1.77} and/or Mg₂SiₓSn₁₋ₓ with x being between 0.2 and 0.8.

12. The method for manufacturing a piece (56), preferably a washer (56), implementing the sintering and compressing step of the manufacturing method according to one of claims 10-11, and comprising a step of machining the second region (54).
